# EUROPÄISCHE PATENTANMELDUNG

(11) **EP 4 325 143 A1**
(43) Veröffentlichungstag der Anmeldung: **21.02.2024**
(21) Anmeldenummer: 22191245.4
(22) Anmeldetag: 19.08.2022
(51) Int. Cl.: F25B 41/20, F16K 15/06, F16K 27/02, B60H 1/00, F25B 9/00

(54) **ANORDNUNG FÜR EINEN TEMPERIERKREISLAUF**

(71) Anmelder: TI Automotive Technology Center GmbH, 76437 Rastatt (DE)
(72) Erfinder: Brixner, Sebastian, 68535 Edingen-Neckarhausen (DE); Merz, Werner, 76571 Gaggenau (DE); Kolb, Gerhard, 68789 St. Leon-Rot (DE); Henning, Christian, 77694 Kehl (DE)
(74) Vertreter: Reiser & Partner Patentanwälte mbB

(57) **Zusammenfassung**

Anordnung (1) für einen Temperierkreislauf, umfassend einen Grundkörper (2), in welchem zumindest ein Kanal (3) für den Transport von Temperiermedium eingebracht ist und zumindest ein Rückschlagventil (4), welches den Transport von Temperiermedium in einer Strömungsrichtung des Kanals (3) zumindest begrenzt, wobei das Rückschlagventil (4) als Einsatz ausgebildet und zumindest teilweise in den Grundkörper (2) aufgenommen ist.

## Beschreibung

Die Erfindung betrifft eine Anordnung für einen Temperierkreislauf, umfassend einen Grundkörper, in welchem zumindest ein Kanal für den Transport von Temperiermedium eingebracht ist und zumindest ein Rückschlagventil, welches den Transport von Temperiermedium in einer Strömungsrichtung des Kanals zumindest begrenzt.

Aus dem Stand der Technik sind Anordnungen für eine Kühleinrichtung bekannt, bei welcher Rückschlagventile derart in einen Temperiermittelkreislauf eingebunden sind, dass je nach Strömungsrichtung des Temperiermediums verschiedene Komponenten des Temperiermittelkreislaufs mit Temperiermittel durchströmt werden.

Grundsätzlich finden sich Temperiermittelströme in einer Vielzahl von Anwendungen, bei denen es erforderlich ist, eine Einrichtung zu temperieren und dabei je nach Anforderung entweder zu erwärmen oder zu kühlen. Dies gilt insbesondere auch für Elektrofahrzeuge, bei denen eine möglichst hohe Reichweite erzielt werden soll. Dabei ist es erforderlich, elektrische Komponenten zu temperieren. Zu temperierende Komponenten sind dabei insbesondere elektrische Energiespeicher, aber auch die Leistungselektronik oder Steckverbindungen von Schnellladeeinrichtungen. Ein elektrischer Energiespeicher hat eine bestmögliche Kapazität nur in einem sehr kleinen Temperaturspektrum. Daher ist es erforderlich, elektrische Energiespeicher von Elektrofahrzeugen bei tiefen Umgebungstemperaturen zu erwärmen und bei hohen Außentemperaturen oder bei hohen Lastwechseln zu kühlen. Ein weiterer wesentlicher Aspekt betrifft die Klimatisierung eines Fahrzeuginnenraums, welcher mit einer Temperiereinrichtung in Form einer Klimaanlage klimatisiert ist.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung abgekühlt werden. Die Steuerung des Temperiermediumstroms kann dabei über Magnetventile erfolgen. Es ist aber auch bekannt, Temperiermediumströme anhand von Rückschlagventilen zu steuern, wobei die Rückschlagventile in Form separater Bauelemente in den Temperierkreislauf eingebunden sind.

Die Temperierung, insbesondere die Kühlung kann dabei mittels eines Kühlmittelkreislaufs erfolgen, in welchem ein Temperiermedium in Form eines Kältemittels, beispielsweise CO₂ oder ein halogenierter Kohlenwasserstoff zirkuliert. Bei einem auf CO₂ als Kältemittel (R744) basierenden Kühlmittelkreislaufs herrscht im Inneren des Kreislaufs mit 170 bar ein hoher Systemdruck. Die Temperaturen des Kältemittels bewegen sich dabei zwischen -30 °C und 100 °C.

Der Erfindung liegt die Aufgabe zugrunde, eine Anordnung für eine Kühleinrichtung bereitzustellen, die kostengünstig und kompakt ist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung für einen Temperierkreislauf umfasst einen Grundkörper, in welchen zumindest ein Kanal für den Transport von Temperiermedium eingebracht ist und zumindest ein Rückschlagventil, welches den Transport von Temperiermedium in einer Strömungsrichtung des Kanals zumindest begrenzt, wobei das Rückschlagventil als Einsatz ausgebildet ist und zumindest teilweise in dem Grundkörper aufgenommen ist.

Dementsprechend ist das zumindest eine Rückschlagventil zumindest teilweise in den Grundkörper integriert, sodass sich eine besonders kompakte Anordnung ergibt. Durch die direkte Integration des Rückschlagventils in den Grundkörper können darüber hinaus je nach Ausgestaltung auch zusätzliche Leitungsverbindungen zwischen dem Grundkörper und dem Rückschlagventil wie Schläuche, Rohre oder dergleichen entfallen. Dadurch, dass das Rückschlagventil als Einsatz ausgebildet ist, ist das Rückschlagventil demontierbar in den Grundkörper aufgenommen. Dies ermöglicht einen Austausch einzelner Komponenten der Anordnung.

Der Grundkörper kann als Verteilerkanal ausgebildet sein. Ein Verteilerkanal eines Ringkreislaufs dient dazu, Temperiermedium zu verteilen. Gemäß einer vorteilhaften Ausgestaltung ist der Temperierkreislauf als Kältemittekreislauf ausgebildet. In diesem Fall ist das Temperiermedium ein Kältemittel, wobei die erfindungsgemäße Anordnung insbesondere für den Einsatz von CO₂ (R744) als Kältemittel geeignet ist. Der Verteilerkanal weist dabei zumindest einen Kanal auf. Gemäß einer vorteilhaften Ausgestaltung weist der Verteilerkanal mehrere Kanäle auf, sodass die Ansteuerung verschiedener Komponenten des Kältemittelkreislaufs besonders einfach und kostengünstig möglich ist. Darüber hinaus ermöglicht der Grundkörper die Ausbildung einer besonders kompakten Anordnung. Der Grundkörper besteht vorzugsweise aus metallischem Werkstoff, wobei es prinzipiell auch denkbar ist, den Grundkörper aus Kunststoff auszubilden. Die Kanäle können in Einbeziehungsweise Ausgänge münden und die Ein- und Ausgänge können zur Aufnahme von Rohrleitungen mit weiteren Grundkörpern oder weiteren Komponenten eines Temperierkreislaufs ausgerüstet sein. Im Fall einer blockförmigen Ausgestaltung des Grundkörpers ergibt sich ein besonders kompaktes Design der Anordnung. Dabei kann der Grundkörper mehrere Kanäle und mehrere Rückschlagventile aufweisen.

Das Rückschlagventil begrenzt den Temperiermittelstrom in einer Richtung beziehungsweise verhindert das Strömen von Temperiermittel in einer Strömungsrichtung. Weist die Anordnung mehrere Kanäle auf, können Rückschlagventile so in die Anordnung eingebracht sein, dass je nach Strömungsrichtung nur bestimmte Kanäle von Temperiermedium durchströmt werden. In anderen Kanälen ist der Temperiermittelstrom durch das Rückschlagventil blockiert. Dementsprechend können je nach Strömungsrichtung des Temperiermediums verschiedene an die Anordnung angeschlossene Komponenten temperiert werden. Dabei sind unter Komponenten nicht nur zu temperierende Einrichtungen zu verstehen, sondern auch Einrichtungen, die das Temperiermedium auf eine vorgegebene Temperatur bringen, also dieses erwärmen oder kühlen.

Das Rückschlagventil kann eine Hülse, einen Kolben und einen Befestigungsabschnitt aufweisen, wobei in die Hülse umfangsseitig zumindest eine Durchbrechung eingebracht ist, wobei die Hülse auf der dem Befestigungsabschnitt abgewandten Stirnseite eine Durchbrechung aufweist, wobei der Kolben der Durchbrechung zugeordnet ist. Die der Durchbrechung zugewandte Seite des Kolbens kann stempelartig oder kugelartig ausgebildet sein und blockiert einen Temperiermittelstrom über die Durchbrechung in einer Strömungsrichtung. Vorzugsweise erfolgt die Ausgestaltung so, dass Temperiermedium über die stirnseitige Durchbrechung in die Hülse einströmen kann, wohingegen Temperiermedium blockiert wird, welches über die Hülse in Richtung der Durchbrechung strömt. In diesem Fall drückt sich der Kolben an die Durchbrechung an und verhindert ein Ausströmen von Temperiermedium. Dabei kann dem Kolben ein Federmittel zugeordnet sein, wobei das Federmittel den Kolben mit elastischer Vorspannung an die umlaufende Kante der Durchbrechung andrückt.

In die Hülse können mehrere umfangsseitige Durchbrechungen eingebracht sein. Über die umfangsseitigen Durchbrechungen kann Temperiermedium aus der Hülse ausströmen.

Die Hülse schützt den Kolben des Rückschlagventils und ermöglicht eine besonders einfache Montage und Integration des Rückschlagventils in die Anordnung. Des Weiteren ist das aus Hülse und Kolben ausgebildete Rückschlagventil besonders kompakt.

Vorzugsweise strömt Temperiermedium über die stirnseitige Durchbrechung in das Rückschlagventil ein und über die umfangsseitige Durchbrechung aus.

In dem Grundkörper kann ein Ringkanal eingebracht sein, der den umfangsseitigen Durchbrechungen zugeordnet ist. Der Ringkanal erstreckt sich um die Durchbrechungen herum und bildet einen Sammelkanal, in welchem sich Temperiermedium ansammeln und über einen Strömungskanal abtransportiert werden kann. Durch den Ringkanal können Strömungsverluste reduziert werden.

In den Befestigungsabschnitt und den Grundkörper kann jeweils zumindest eine Verdrehsicherung eingebracht sein. Vorzugsweise wirken die Verdrehsicherung von Befestigungsabschnitt und Grundkörper zusammen, sodass eine positionsrichtige Montage des Rückschlagventils in der Anordnung sichergestellt ist. Dies ist insbesondere dann vorteilhaft, wenn eine positionsrichtige Zuordnung der stirnseitigen und/oder umfangsseitigen Durchbrechungen relativ zu den Strömungskanälen gewünscht ist.

Aus dem Befestigungsabschnitt kann eine kegelförmige Aufnahme für eine Rohrleitungsverbindung ausgebildet sein. Dabei kann die kegelförmige Aufnahme eine Kupplung bilden, an welcher eine Rohrleitung befestigt werden kann. Bei dieser Ausgestaltung kann eine lokale Verformung der Rohrleitung erfolgen, sodass eine besonders dichte Verbindung von Rückschlagventil und Rohrleitung gegeben ist.

Der Befestigungsabschnitt kann mit einer Positionierhilfe ausgerüstet sein. Eine Positionierhilfe ist insbesondere dann vorteilhaft, wenn das Rückschlagventil so in der Anordnung aufgenommen beziehungsweise integriert ist, dass es nicht möglich ist, das Rückschlagventil mit einfachen Mitteln zu drehen. Dementsprechend ermöglicht die Positionierhilfe mit einfachen Mitteln eine lagerichtige Montage des Rückschlagventils in der Anordnung. Hierzu kann beispielsweise eine Bohrung oder ein Vorsprung oder dergleichen aus dem Befestigungsabschnitt ausgebildet sein, sodass das Rückschlageventil mit Hilfe eines geeigneten Werkzeugs gedreht werden kann.

Dem zumindest einem Kanal kann ein Expansionsventil zugeordnet sein. Das Expansionsventil ist Bestandteil eines Temperierkreislaufs und durch die direkte Zuordnung des Expansionsventils zu einem Kanal kann die Anordnung besonders kompakt ausgebildet sein.

Es kann ein Querkanal vorgesehen sein, der quer zu der Hülse verläuft. Dabei ist insbesondere denkbar, dass das Temperiermedium über eine erste umfangsseitige Durchbrechung in die Hülse einströmt und über eine zweite umfangsseitige Durchbrechung aus der Hülse ausströmt, ohne dass dabei der Kolben betätigt wird. Dabei kann die erste Durchbrechung der zweiten Durchbrechung gegenüber liegen. Dementsprechend ermöglicht die Ausgestaltung eines Querkanals die Ausgestaltung eines Bypass, durch den Temperiermittel strömen kann, ohne dass dabei ein Rückschlagventil betätigt wird. Der Grundkörper kann neben dem Querkanal mehrere Kanäle aufweisen, wobei den Kanälen jeweils ein Rückschlagventil zugeordnet ist. Durch das Rückschlagventil kann das Temperiermedium die Kanäle lediglich in einer Strömungsrichtung passieren, während das Temperiermedium den Querkanal in beiden Strömungsrichtungen passieren kann.

Aus der umfangsseitigen Durchbrechung und/oder der stirnseitigen Durchbrechung kann ein Anlageabschnitt ausgebildet sein, wobei sich der Querschnitt des Anlageabschnitts ausgehend von dem Inneren der Hülse nach außen erweitert. Über den Anlageabschnitt kann ein Leitungselement, beispielsweise eine Rohrleitung, dichtend an das Rückschlagventil angeschlossen werden. Hierzu kann das Leitungselement mit einem rohrföhrmigen Abschnitt und einer an einem Ende des Leitungselements ausgebildeten Verdickung versehen sein. Auf das Leitungselement kann ein Verbindungselement aufgeschoben sein, welches eine Ausnehmung aufweist und das Leitungselement derart in der Ausnehmung aufnimmt, dass das Verbindungselement mittels der Verdickung formschlüssig und verliersicher auf dem Leitungselement gehalten ist. Das Verbindungselement und das Bauteil können jeweils ein Gewinde aufweisen, wobei die Gewinde in Eingriff stehen und eine Gewindeverbindung ausbilden, wobei die Verdickung einen Kontaktabschnitt ausbildet. Der Kontaktabschnitt kann dichtend an dem Anlageabschnitt anliegen, sodass das Leitungselement strömungsleitend mit der Hülse verbunden ist. Die Gewindeverbindung presst mittels der formschlüssigen Verbindung von Verbindungselement und Leitungselement den Kontaktabschnitt an den Anlageabschnitt an. Der Anlageabschnitt kann einen kegelförmigen Querschnitt ausbilden.

Einige Ausgestaltungen der erfindungsgemäßen Anordnung werden nachfolgend anhand der Figuren näher erläutert. Diese zeigen, jeweils schematisch:
- Fig. 1: eine Anordnung mit integriertem Rückschlagventil im Schnitt;
- Fig. 2: eine Anordnung gemäß Figur 1 mit Rohraufnahmen, ausgebildet aus dem Rückschlagventil;
- Fig. 3: eine Anordnung mit einem Rückschlagventil mit Rohraufnahme;
- Fig. 4: eine Anordnung gemäß Figur 1 mit mehreren Rohraufnahmen;
- Fig. 5: im Detail ein Rückschlagventil im Schnitt.

Die Figuren zeigen eine Anordnung 1 für einen Temperierkreislauf. Die Anordnung 1 bildet einen Bestandteil eines Kältemittelkreislaufs einer Klimaanlage. Die Anordnung 1 umfasst einen Grundkörper 2, in welchem mehrere Kanäle 3 für den Transport von Temperiermedium eingebracht sind. Das Temperiermedium ist vorliegende ein Kältemittel, konkret CO₂. Der Grundkörper 2 bildet dabei einen Verteilerkanal und leitet das Kältemittel den Komponenten des Kältemittelkreislaufs zu.

Ferner sind Rückschlagventile 4 vorgesehen, welche den Transport von Temperiermedium in einer Strömungsrichtung innerhalb der Kanäle blockieren. Die Rückschlagventile 4 sind als Einsatz ausgebildet und in den Grundkörper 2 aufgenommen. Dabei sind die Rückschlagventile 4 so in die Anordnung 1 integriert, dass Temperiermittelströme modifiziert werden können, wobei je nach Strömungsrichtung verschiedene Komponenten des Temperierkreislaufs durchströmt werden können, wohingegen in anderen Strömungskanälen durch ein Rückschlagventil 4 der Temperiermittelstrom blockiert ist. Dadurch ist es beispielsweise möglich, je nach Umgebungstemperatur und Leistungsanforderung Temperiermittelströme die Zirkulation des Kältemittels zu modifizieren. Die Modifikation des Temperiermittelstroms erfolgt dabei mittels der in den Grundkörper 2 angeordneten Rückschlagventile 4. Die Komponenten des Kältemittelkreislaufs sind dabei direkt an den Grundkörper 2 angeschlossen. Je nach Bauraum und Anordnung der Komponenten können die Komponenten aber auch über Schlauch- oder Rohrleitungen an den Grundkörper 2 angeschlossen sein. Komponenten des Kältemittelkreislaufs sind dabei insbesondere Wärmetauscher, Verdampfer, Chiller, Kondensatoren, Gaskühler, Batteriekühlplatten, Kompressoren und Akkumulatoren. Diese Komponenten können mittels der Anordnung 1 wahlweise angesteuert werden. Der Grundkörper 2 ist bei der vorliegenden Ausgestaltung aus Aluminium ausgebildet.

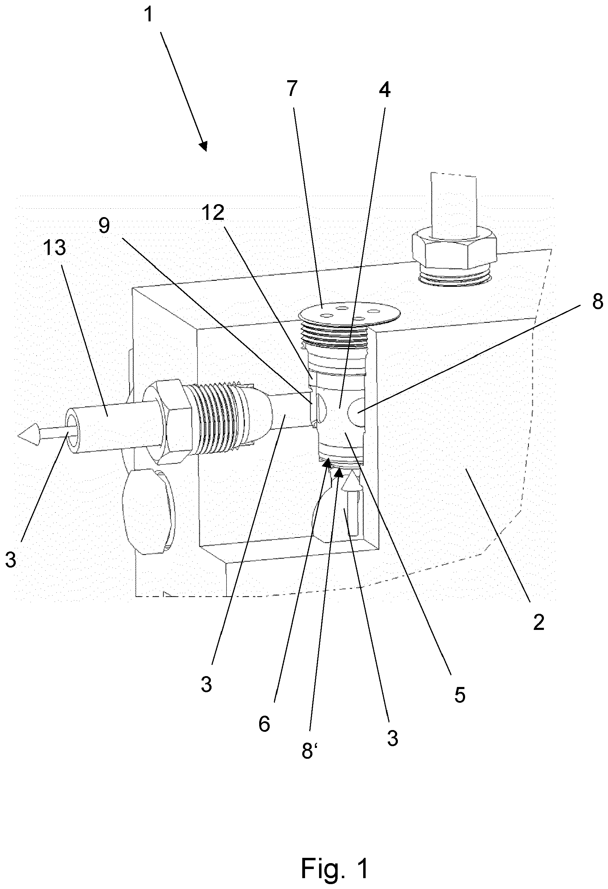

Bei der Ausgestaltung gemäß Figur 1 ist das Rückschlagventil 4 vollkommen in den Grundkörper 2 aufgenommen und schließt plan mit der Oberfläche des Grundkörpers 2 ab. Hierzu ist in den Grundkörper 2 eine Ausnehmung eingebracht, in welcher das Rückschlagventil 4 angeordnet ist. Das Rückschlagventil 4 weist eine Hülse 5, einen in der Hülse 5 angeordneten Kolben 6 und einen Befestigungsabschnitt 7 auf, wobei in die Hülse 5 umfangsseitig mehrere Durchbrechungen 8 eingebracht sind, die gleichmäßig über den Umfang der Hülse 5 verteilt sind. Bei dieser Ausgestaltung bilden die Hülse 5 und der Befestigungsabschnitt 7 zwei unabhängige Bauelemente. Die Hülse 5 mit darin aufgenommenen Kolben 6 ist als Einsatz ausgebildet, der in die Ausnehmung eingesteckt ist. Der Befestigungsabschnitt 7 ist als Schraubdeckeldeckel ausgebildet und sichert die Hülse 5 in der Ausnehmung. Auf der dem Befestigungsabschnitt 7 abgewandten Stirnseite ist eine weitere Durchbrechung 8' in die Hülse 5 eingebracht, wobei der Kolben 6 der Durchbrechung 8' zugeordnet ist. Der Kolben 6 wird über ein Federmittel innenseitig an die weitere Durchbrechung 8' angedrückt. Über die Durchbrechung 8' steht das Rückschlagventil 4 strömungsleitend mit dem im Inneren des Grundkörpers 2 angeordneten Kanal 3 in Verbindung. Die Hülse 5 und der Befestigungsabschnitt 7 sind bei der vorliegenden Ausgestaltung aus Stahl ausgebildet.

Das Temperiermedium strömt durch den inneren Kanal 3 über die stirnseitige Durchbrechung 8' in die Hülse 5 ein und über die umfangsseitigen Durchbrechungen 8 aus. In der umgekehrten Strömungsrichtung blockiert der an der weiteren Durchbrechung 8' anliegende Kolben 6 das Temperiermedium, sodass es nicht über die weitere Durchbrechung 8' ausströmen kann.

In den Grundkörper 2 ist ein Ringkanal 9 eingebracht, der den umfangsseitigen Durchbrechungen 8 zugeordnet ist und einen Sammelkanal bildet, der sich um die Hülse 5 herum erstreckt.

Der Befestigungsabschnitt 7 ist mit einer Positionierhilfe 12 ausgerüstet. In den Befestigungsabschnitt 7 und in den Grundkörper 2 ist jeweils eine Verdrehsicherung 12 eingebracht, welche sicherstellt, dass die Hülse 5 des Rückschlagventils 4 lagerichtig in dem Grundkörper 2 positioniert ist. Die Verdrehsicherung 12 umfasst einen in die Hülse 5 außenseitig eingebrachten radialen Vorsprung, der in eine in die Ausnehmung des Grundkörpers 2 eingebrachte kongruente Vertiefung eingreift.

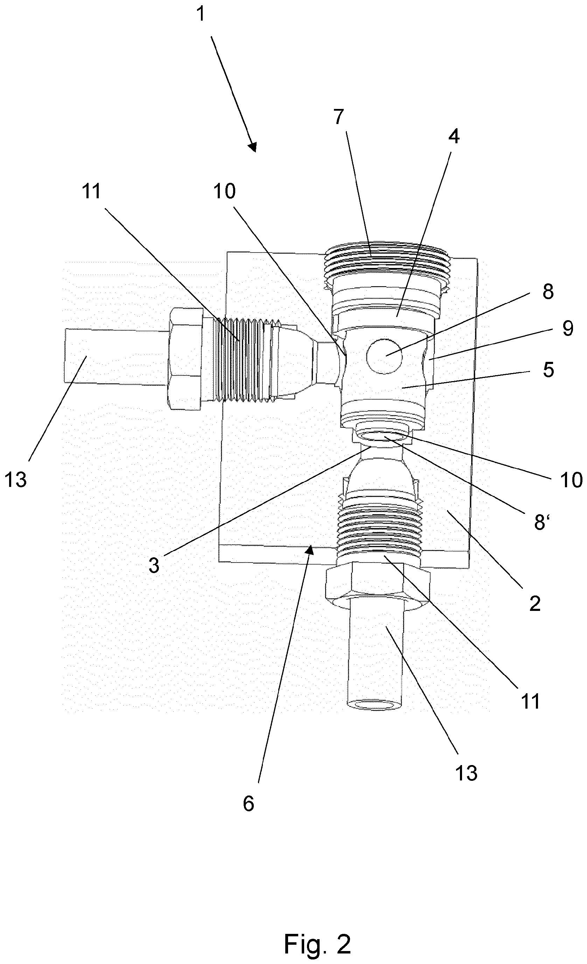

Figur 2 zeigt eine Weiterbildung der in Figur 1 gezeigten Anordnung 1. Bei der vorliegenden Anordnung 1 weiten sich die Durchbrechung 8 und die weitere Durchbrechung 8' ausgehend von dem Inneren der Hülse 5 nach außen auf und sind kegelförmig ausgebildet. Dadurch bilden die Durchbrechung 8 und die weitere Durchbrechung 8' eine Aufnahme 10, an der jeweils das verdickte Ende der Rohrleitung 13 dichtend anliegt. Die Aufnahme 10 ist Teil einer Rohrleitungsverbindung 11.

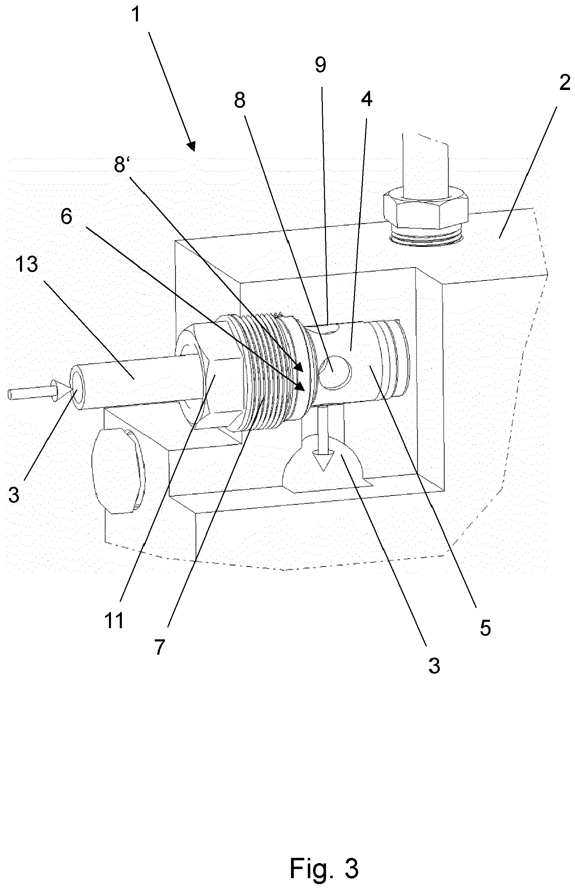

Bei der Ausgestaltung gemäß Figur 3 ist das Rückschlagventil 4 in den Grundkörper eingeschraubt, wobei eine aus dem Rückschlagventil 4 ausgebildete Aufnahme zur Verbindung des Rückschlagventils 4 mit der Rohrleitung aus dem Grundkörper 2 hervorsteht. Der Grundkörper 2 weist eine Ausnehmung auf, in der das Rückschlagventil 4 teilweise aufgenommen ist. Das Rückschlagventil 4 weist eine Hülse 5, einen in der Hülse 5 angeordneten Kolben 6 und einen Befestigungsabschnitt 7 auf, wobei in die Hülse 5 umfangsseitig mehrere Durchbrechungen 8 eingebracht sind, die gleichmäßig über den Umfang der Hülse 5 verteilt sind. Der Befestigungsabschnitt 7 und die Ausnehmung des Grundkörpers 2 sind mit einem Gewinde versehen.

Auf der dem Befestigungsabschnitt 7 zugewandten Seite ist eine weitere Durchbrechung 8' in die Hülse 5 eingebracht, wobei der Kolben 6 der Durchbrechung 8' zugeordnet ist. Die weitere Durchbrechung 8' weitet sich ausgehend von dem Inneren der Hülse 5 nach außen auf und ist kegelförmig ausgebildet. Dadurch bildet die Durchbrechung 8' eine Aufnahme 10, an der das verdickte Ende der Rohrleitung 13 dichtend anliegt. Die Aufnahme ist Teil einer Rohrleitungsverbindung 11.

Der Kolben 6 wird über ein Federmittel innenseitig an die weitere Durchbrechung 8' angedrückt. Über die Durchbrechung 8' steht das Rückschlagventil 4 strömungsleitend mit dem im Inneren des Grundkörpers 2 angeordneten Kanal 3 in Verbindung.

Das Temperiermedium strömt durch den inneren Kanal 3 über die stirnseitige Durchbrechung 8' in die Hülse 5 ein und über die umfangsseitigen Durchbrechungen 8 aus. In der umgekehrten Strömungsrichtung blockiert der an der weiteren Durchbrechung 8' anliegende Kolben 6 das Temperiermedium, sodass es nicht über die weitere Durchbrechung 8' ausströmen kann.

In den Grundkörper 2 ist ein Ringkanal 9 eingebracht, der den umfangsseitigen Durchbrechungen 8 zugeordnet ist und einen Sammelkanal bildet, der sich um die Hülse 5 herum erstreckt.

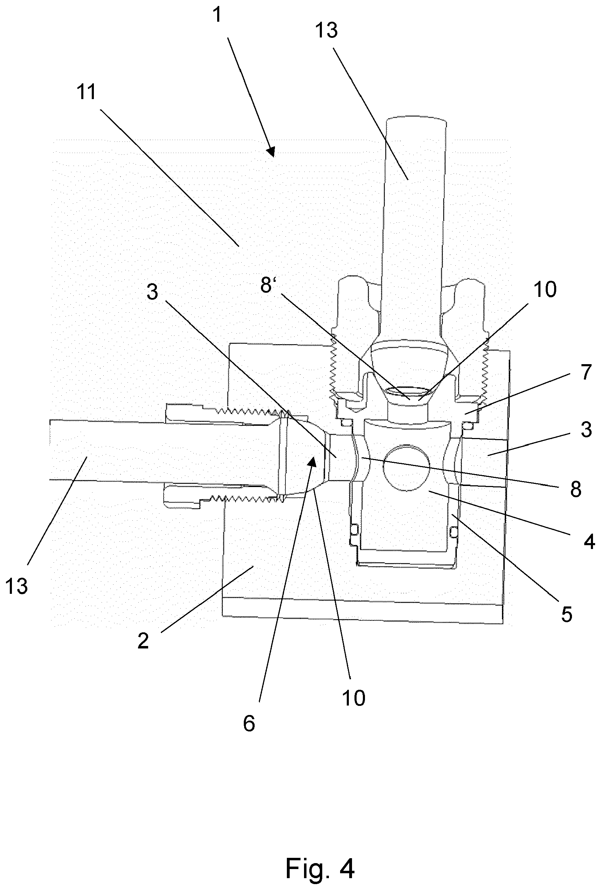

Figur 4 zeigt eine Weiterbildung der in Figur 2 gezeigten Anordnung 1. Bei der vorliegenden Anordnung 1 weitet sich die weitere Durchbrechung 8' ausgehend von dem Inneren der Hülse 5 nach außen auf und ist kegelförmig ausgebildet. Aus dem der Durchbrechung 8 zugeordneten Kanal 3 ist eine weitere Querschnittserweiterung ausgebildet. Dementsprechend ist die dem Kanal 3 zugeordnete Querschnittserweiterung aus dem Grundkörper ausgebildet. Die Durchbrechung 8 und die aus Kanal 3 ausgebildete Querschnittserweiterung bilden eine Aufnahme 10, an der jeweils das verdickte Ende der Rohrleitung 13 dichtend anliegt. Die Aufnahme 10 ist jeweils Teil einer Rohrleitungsverbindung 11.

Der in den Figuren 1 bis 4 gezeigte Grundkörper 2 kann so ausgestaltet sein, dass er mehrere Rückschlagventile 4 aufnimmt. Der Grundkörper 2 kann eine Rohranordnung für eine Temperiereinrichtung bilden. Dabei kann aus dem Grundkörper 2 ein Querkanal ausgebildet sind, der quer zu den Rückschlagventilen 4 verläuft und umfangsseitige Durchbrechungen 8 der Rückschlagventile 4 strömungsleitend miteinander verbindet. Der Querkanal kann einen Bypass ausbilden. In diesem Zusammenhang ist in Figur 4 zu erkennen, dass sich der Kanal 3 beidseitig der Hülse 5 erstreckt, so dass Temperiermedium die Hülse 5 ungehindert durch den Kolben 6 das Rückschlagventil 4 in beiden Strömungsrichtung durchströmen kann.

Einem oder mehreren Kanälen 3 kann ein Expansionsventil zugeordnet sein. In diesem Zusammenhang ist insbesondere denkbar, dass das Expansionsventil aus der Hülse 5, insbesondere aus einer der Durchbrechungen 8 des Rückschlagventils 4 ausgebildet ist. Dabei bildet das Expansionsventil einen integralen Bestandteil des Rückschlagventils 4.

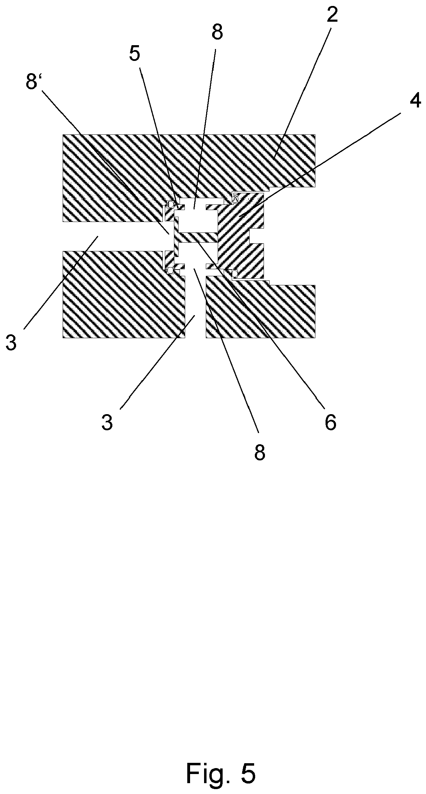

Figur 5 zeigt im Detail ein Rückschlagventil 4 einer Anordnung 1 gemäß einer der vorherigen Figuren. Das Rückschlagventil 4 weist eine Hülse 5, einen in der Hülse 5 angeordneten Kolben 6 und einen Befestigungsabschnitt 7 auf, wobei in die Hülse 5 umfangsseitig mehrere Durchbrechungen 8 eingebracht sind, die gleichmäßig über den Umfang der Hülse 5 verteilt sind. Auf der dem Befestigungsabschnitt 7 abgewandten Stirnseite ist eine weitere Durchbrechung 8' in die Hülse 5 eingebracht, wobei der Kolben 6 der Durchbrechung 8' zugeordnet ist. Der Kolben 6 wird über ein Federmittel innenseitig an die weitere Durchbrechung 8' angedrückt.

## Patentansprüche

1. Anordnung (1) für einen Temperierkreislauf, umfassend einen Grundkörper (2), in welchem zumindest ein Kanal (3) für den Transport von Temperiermedium eingebracht ist und zumindest ein Rückschlagventil (4), welches den Transport von Temperiermedium in einer Strömungsrichtung des Kanals (3) zumindest begrenzt, wobei das Rückschlagventil (4) als Einsatz ausgebildet und zumindest teilweise in den Grundkörper (2) aufgenommen ist.

2. Anordnung nach Anspruch 1, **dadurch gekennzeichnet, dass** der Grundkörper (2) als Verteilerkanal ausgebildet ist.

3. Anordnung nach Anspruch 1 oder 2, **dadurch gekennzeichnet, dass** das Rückschlagventil (4) eine Hülse (5), einen Kolben (6) und einen Befestigungsabschnitt (7) aufweist, wobei in die Hülse (5) umfangsseitig zumindest eine Durchbrechung (8) eingebracht ist, wobei die Hülse (5) auf der dem Befestigungsabschnitt (7) abgewandten Stirnseite eine weitere Durchbrechung (8') aufweist, wobei der Kolben (6) der weiteren Durchbrechung (8') zugeordnet ist.

4. Anordnung nach Anspruch 3, **dadurch gekennzeichnet, dass** in die Hülse (5) mehrere umfangsseitige Durchbrechungen (8) eingebracht sind.

5. Anordnung nach Anspruch 3 oder 4, **dadurch gekennzeichnet, dass** Temperiermedium über die weitere Durchbrechung (8') einströmt und über die umfangsseitige Durchbrechung (8) ausströmt.

6. Anordnung nach einem der Ansprüche 3 bis 5, **dadurch gekennzeichnet, dass** in den Grundkörper (2) ein Ringkanal (9) eingebracht ist, der den umfangsseitigen Durchbrechungen (8) zugeordnet ist.

7. Anordnung nach einem der Ansprüche 3 bis 6, **dadurch gekennzeichnet, dass** in den Befestigungsabschnitt (7) und in den Grundkörper (2) jeweils zumindest eine Verdrehsicherung eingebracht ist.

8. Anordnung nach einem der Ansprüche 3 bis 7, **dadurch gekennzeichnet, dass** aus dem Befestigungsabschnitt (7) eine kegelförmige Aufnahme (10) für eine Rohrleitungsverbindung (11) ausgebildet ist.

9. Anordnung nach einem der Ansprüche 3 bis 8, **dadurch gekennzeichnet, dass** der Befestigungsabschnitt (7) mit einer Positionierhilfe (12) ausgerüstet ist.

10. Anordnung nach einem der Ansprüche 1 bis 9, **dadurch gekennzeichnet, dass** zumindest einem Kanal (3) ein Expansionsventil (13) zugeordnet ist.

11. Anordnung nach einem der Ansprüche 3 bis 10, **dadurch gekennzeichnet, dass** ein Querkanal vorgesehen ist, der quer zur Hülse (5) verläuft.

12. Anordnung nach einem der Ansprüche 1 bis 11, **dadurch gekennzeichnet, dass** der Grundkörper aus metallischem Werkstoff ausgebildet ist.

13. Anordnung nach einem der Ansprüche 3 bis 12, **dadurch gekennzeichnet, dass** die Hülse (5) und der Befestigungsabschnitt (7) aus metallischem Werkstoff ausgebildet sind.

14. Temperierkreislauf, umfassend eine Anordnung (1) nach einem der vorherigen Ansprüche.

15. Temperierkreislauf nach Anspruch 14, **dadurch gekennzeichnet, dass** der Temperierkreislauf ist und dass das Temperiermittel ein Kältemittel auf der Basis von CO₂ ist.
